# EUROPEAN PATENT SPECIFICATION

(11) **EP 2 378 779 B1**
(45) Date of publication and mention of the grant of the patent: **03.04.2013**
(21) Application number: 10190043.9
(22) Date of filing: 04.11.2010
(51) Int. Cl.: H04N 13/04

(54) **Shutter glasses, display apparatus including the same, and control method thereof**
Blendengläser, Anzeigevorrichtung damit und Steuerungsverfahren dafür
Lunettes à obturateur, appareil d'affichage les incluant et leur procédé de contrôle

(30) Priority: 16.04.2010 KR 20100035141
(43) Date of publication of application: 19.10.2011
(73) Proprietor: Samsung Electronics Co., Ltd., Suwon-si, Gyeonggi-do, 443-742 (KR)
(72) Inventor: Seo, Je-hwan, Daegu (KR); Jung, Do-sung, Gyeonggi-do (KR); Lee, Cheon-seong, Gyeonggi-do (KR); Hwang, Tae-don, Gyeonggi-do (KR)
(74) Representative: Fearnside, Andrew Simon

(56) References cited:
- US-A- 5 821 989
- US-A1- 2003 133 569
- US-B1- 6 687 399

## Description

### BACKGROUND

### Field

Exemplary embodiments relate to a display apparatus generating and transmitting a sync signal corresponding to a three-dimensional (3D) image, shutter glasses of which a left-eye shutter and a right-eye shutter are selectively opened and shut in response to the sync signal, and a control method thereof, and more particularly to a display apparatus generating a new-type sync signal, shutter glasses selectively opened and shut in response to the sync signal, and a control method thereof.

### Description of the Related Art

A display apparatus can display a two-dimensional (2D) image or a three-dimensional (3D) image according to characteristics thereof. A viewer's two eyes differ in terms of a view angle and, thus, recognize an object in three dimensions. With this principle, the 3D image is displayed by dividing the image into a left-eye image and a right-eye image to be alternately displayed in the display apparatus. Furthermore, to view the 3D image, there are provided shutter glasses that operate corresponding to the 3D image.

Specifically, if a user wears the shutter glasses while the display apparatus displays a 3D image, the shutter glasses are selectively opened or shut with regard to a user's two eyes as the left-eye image or the right-eye image is displayed in a frame unit. That is, the shutter glasses open a shutter corresponding to a user's left eye when the display apparatus displays the left-eye image, and open a shutter corresponding to a user's right eye when the display apparatus displays the right-eye image, thereby allowing a user to recognize a 3D image in three dimensions. Accordingly, the display apparatus transmits a sync signal such that a left-eye shutter and a right-eye shutter of the shutter glasses are normally opened and shut in sync with the displayed frame.

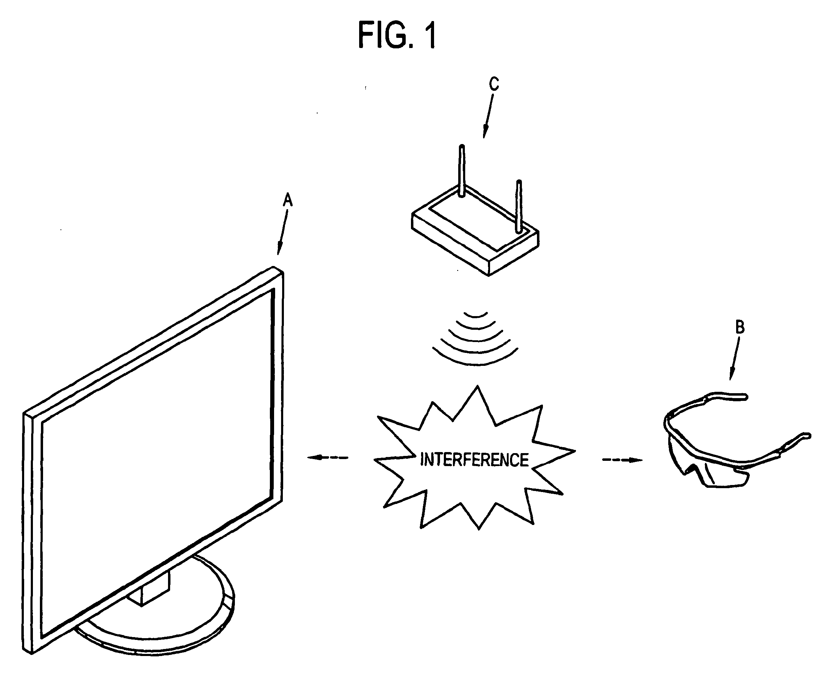

However, as shown in FIG. 1, a related art display apparatus (A) and related art shutter glasses (B) coexist with an electronic device (C) (such as a wireless local area network (WLAN) access point, a microwave oven, etc.) which emits electromagnetic waves, so that the sync signal transmitted from the related art display apparatus may interfere with the electromagnetic waves under such an environment. Accordingly, the interference with the sync signal may cause an error in opening and closing the shutters of the related art shutter glasses. United States patent number US-A-5821989 discloses a stereoscopic 3-D viewing system with glasses having shutters controlled by control signals produced using synchronization signals, wherein if it is discovered that the displaged field did not alternate as expected, a signal is sent to ten shuttens to correct the error.

### Summary

According to the present invention there is provided an apparatus and method as set forth in the appended claims. Other features of the invention will be apparent from the dependent claims, and the description which follows.

Accordingly, one or more exemplary embodiments provide a method and apparatus for transmitting a sync signal which prevents shutter glasses from malfunction in opening and closing shutters even though the sync signal transmitted from the display apparatus is interfered with an electromagnetic wave or the like of other home appliances.

According to an aspect of an exemplary embodiment, there is provided a display apparatus for use with shutter glasses, the display apparatus including: a video signal processor which processes a predetermined three-dimensional (3D) video signal to be displayed; a communication unit which communicates with the shutter glasses; and a sync signal generator which generates a sync signal to open and close shutters of the shutter glasses in correspondence with the 3D video signal, wherein the sync signal generator transmits, to the shutter glasses, the generated sync signal which includes sync signal error-correction information for correcting an error in a transmitted sync signal that causes malfunction of the shutter glasses, through the communication unit.

The sync signal generator may transmit the sync signal containing the error-correction information in plural during a predetermined period of time.

The error-correction information may include time information about a difference in transmission time among the plurality of transmitted sync signals.

The communication unit may transmit the sync signal in the form of a radio frequency (RF) signal.

The communication unit may transmit the sync signal through at least one communication channel included in a predetermined communication band.

The communication unit may respectively transmit at least two consecutively transmitted sync signals through different communication channels.

The display apparatus may further include a receiver which receives the 3D video signal from an exterior.

The display apparatus may further include the display unit which displays a 3D image processed by the video signal processor.

The display apparatus may further include the shutter glasses which include: a shutter unit including a left shutter and a right shutter opened and shut alternately; and a controller which controls the left and right shutters to be selectively opened and shut in response to the sync signal including the error-correction information, received through the communication unit.

The shutter glasses may further include a sync signal processor to process the sync signal including the error-correction information, and the controller may control the sync signal processor to generate a sync signal corrected on the basis of the error-correction information and the left and right shutters to be selectively opened and shut in response to the corrected sync signal.

According to an aspect of another exemplary embodiment, there is provided shutter glasses for use with a display apparatus displaying a three-dimensional (3D) image, the shutter glasses including: a shutter unit which includes a left shutter and a right shutter opened and shut alternately; a sync signal processor which processes a received sync signal for opening and shutting the left shutter and the right shutter; and a controller which controls the sync signal processor to generate a corrected sync signal corrected on the basis of sync signal error-correction information when receiving the sync signal, which includes the sync signal error-correction information for correcting an error in the received signal that causes malfunction of the shutter unit, from the display apparatus, and the left and right shutters to be selectively opened and shut in response to the corrected sync signal.

The shutter glasses may further include a shutter communication unit to receive the sync signal from the display apparatus.

The sync signal including the error-correction information may be received in plural through the shutter communication unit during a predetermined period of time.

The error-correction information may include time information about a difference in transmission time among the plurality of received sync signals.

The shutter communication unit may receive the sync signal in the form of a radio frequency (RF) signal.

The shutter communication unit may receive the sync signal through at least one communication channel included in a predetermined communication band.

The shutter communication unit may respectively receive at least two consecutively received sync signals through different communication channels.

According to an aspect of another exemplary embodiment, there is provided a method of transmitting a sync signal in a display apparatus using shutter glasses, the method including: generating a sync signal including error-correction information for correcting an error that causes malfunction of the shutter glasses; and transmitting the generated sync signal including the error-correction information.

The transmitting the sync signal may include a plurality of sync signals including error-correction information during a predetermined period of time.

The error-correction information may include time information about a difference in transmission time among the plurality of transmitted sync signals.

The transmitting the sync signal may include transmitting the sync signal in the form of a radio frequency (RF) signal.

The transmitting the sync signal may include transmitting the sync signal through at least one communication channel included in a predetermined communication band.

The transmitting the sync signal may include respectively transmitting at least two consecutively transmitted sync signals through different communication channels.

According to an aspect of another exemplary embodiment, there is provided a method of controlling shutter glasses, the method including: receiving a sync signal, which includes error-correction information for correcting an error that causes malfunction of the shutter glasses, from a display apparatus; generating a corrected sync signal corrected based on the error-correction information; and selectively opening and shutting a shutter unit including a left shutter and a right shutter in response to the corrected sync signal.

The receiving the sync signal may include receiving the sync signal including the error-correction information in plural during a predetermined period of time.

The error-correction information may include time information about a difference in transmission time among the plurality of received sync signals.

The receiving the sync signal may include receiving the sync signal in the form of a radio frequency (RF) signal.

The receiving the sync signal may include receiving the sync signal through at least one communication channel included in a predetermined communication channel.

The receiving the sync signal may include respectively receiving at least two consecutively received sync signals through different communication channels.

According to an aspect of another exemplary embodiment, there is provided a sync signal generating apparatus including: a communication unit which communicates with shutter glasses; and a sync signal generator which generates a sync signal to open and close shutters of the shutter glasses according to a three-dimensional (3D) video signal, the generated sync signal including error-correction information for correcting an error that causes malfunction of the shutter glasses, wherein the sync signal generator transmits, to the shutter glasses, the generated sync signal comprising the error-correction information through the communication unit.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a schematic view showing a related art display environment;
FIG. 2 is a schematic view showing a display apparatus with shutter glasses according to an exemplary embodiment;
FIG. 3 is a control block diagram of a display apparatus according to an exemplary embodiment;
FIG. 4 is a control block diagram of shutter glasses according to an exemplary embodiment;
FIG. 5 is a view showing a principle of a display apparatus operating according to an exemplary embodiment;
FIG. 6 is a view showing a principle of a display apparatus and shutter glasses operating according to an exemplary embodiment;
FIG. 7 is a flowchart showing a method of transmitting a sync signal in a display apparatus according to an exemplary embodiment; and
FIG. 8 is a flowchart showing a method of controlling shutter glasses according to an exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

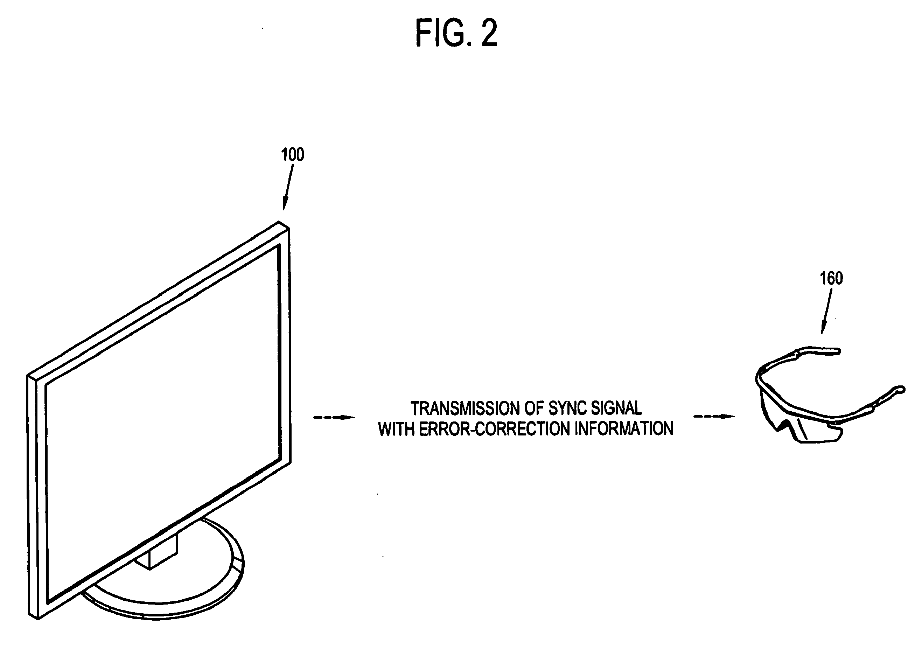

FIG. 2 is a schematic view showing a display apparatus 100 with shutter glasses 160 according to an exemplary embodiment. Referring to FIG. 2, the display apparatus 100 processes a video signal and displays the processed video signal as an image. Furthermore, shutter glasses 160 operate corresponding to a three-dimensional (3D) image if the image displayed on the display apparatus 100 is a 3D image.

The display apparatus 100 may receive the video signal from an external video source (not shown). There is no limit to such a video source in exemplary embodiments. Thus, the display apparatus 100 may receive the video signal from various video sources such as a computer (not shown) that generates and locally provides a video signal with a central processing unit (CPU) and a graphic card (not shown), a server (not shown) that provides a video signal through a network, a broadcasting transmitter (not shown) that transmits a broadcasting signal through airwaves or a cable, etc.

The display apparatus 100 receives a two-dimensional (2D) video signal or a 3D video signal and processes the received video signal to be displayed as an image. As opposed to the 2D image, the 3D image is divided into a left-eye image corresponding to a user's left eye, and a right-eye image corresponding to a user's right eye. When receiving the 3D video signal, the display apparatus 100 according to the present exemplary embodiment displays the left-eye image and the right-eye image alternately per frame on the basis of the 3D video signal. At this time, the display apparatus 100 transmits a sync signal to the shutter glasses 160 in order to open and close a left-eye shutter and a right-eye shutter of the shutter glasses 160 alternately in correspondence with the frame for displaying the left-eye image or the right-eye image. According to an exemplary embodiment, the display apparatus 100 transmits, to the shutter glasses 160, a sync signal that includes error-correction information for correcting an error that causes a malfunction of the shutter glasses 160.

In the case that the display apparatus 100 displays a 3D image, the shutter glasses 160 selectively opens or shuts a view of a user's left or right eye according to which one of the left-eye image and the right-eye image is currently displayed. That is, if the display apparatus 100 is displaying the left-eye image, the shutter glasses 160 open the view of the left eye and shut the view of the right eye. On the other hand, if the display apparatus 100 is displaying the right-eye image, the shutter glasses 160 open the view of the right eye and shut the view of the left eye. To open and shut the view of the left-eye or right-eye, the shutter glasses 160 operate based on the sync signal having the error-correction information received from the display apparatus 100.

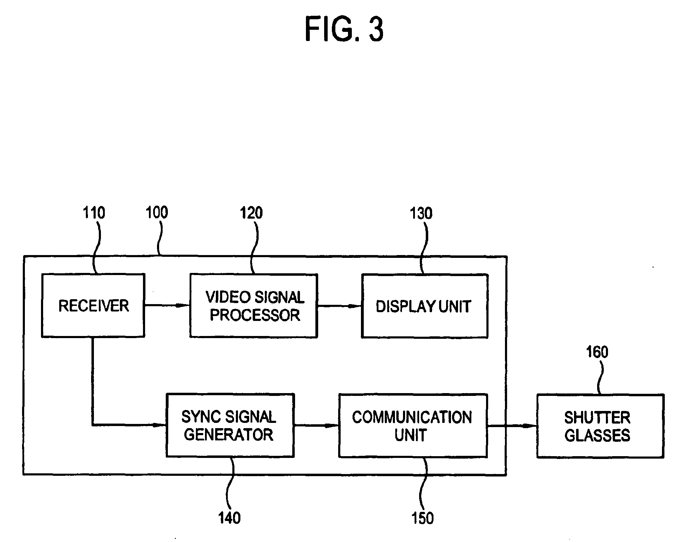

FIG. 3 is a control block diagram of a display apparatus 100 according to an exemplary embodiment. Referring to FIG. 3, the display apparatus 100 includes a receiver 110, a video signal processor 120, a display unit 130, a sync signal generator 140, and a communication unit 150.

The receiver 110 receives a video signal and transmits the received video signal to the video signal processor 120. The receiver 110 may be achieved in various forms corresponding to formats of the received video signal and types of the display apparatus 100. The video signal may include a 2D video signal or a 3D video signal, and further include an audio signal and a data signal.

For example, if the display apparatus 100 is a television (TV), the receiver 110 may wirelessly receive a radio frequency (RF) signal from a broadcasting station (not shown), or receive a video signal based on standards such as composite video, component video, super video, Syndicat des Constructeurs des Appareils Radiorécepteurs et Téléviseurs (SCART), high definition multimedia interface (HDMI), etc. At this time, the receiver 110 may include an antenna (not shown) and/or a tuner (not shown) tuned to broadcasting channels.

For example, if the display apparatus 100 is a monitor for a personal computer (PC), the receiver 110 may be achieved in the form of standards such as: D-Sub for transmitting red/green/blue (RGB) signals based on video graphic array (VGA); a digital video interactive analog (DVI-A), a digital video interactive integrated digital/analog (DVI-I), a digital video interactive digital (DVI-D) based on DVI; HDMI; etc. Also, the receiver 110 may be achieved by at least one of a display port, a unified display interface (UDI), and wireless high definition (HD), etc.

The video signal processor 120 processes the video signal received through the receiver 110 so that an image corresponding to the processed video signal can be displayed on the display unit 130.

The video signal processor 120 implements various preset processors with regard to a video signal. There is no limit to the kinds of processors in exemplary embodiments. For example, the processors may include at least one decoding and encoding corresponding to various video formats, de-interlacing, frame refresh rate conversion, scaling, noise reduction for improving picture quality, detail enhancement, line scanning, etc. The video signal processor 120 may be achieved by an individual processor or an integrated processor.

The video signal processor 120 may process a video signal for a plurality of horizontal scan lines according to frames and scans the video signal to the display unit 130. The video signal processor 120 may scan an image from an upside to a downside on a display area of the display unit 130. In this case, when an image of one frame is completely scanned, an image of the next frame is scanned after a lapse of a preset non-scan period. The video signal processor 120 may alternately scan video signals respectively corresponding to the left- and right-eye images to the display unit 130 if receiving a video signal corresponding to a 3D image from the receiver 110. Thus, in this case, the left-eye image and the right-eye image are alternately displayed on the display unit 130 during the non-scan period.

The display unit 130 displays an image based on a video signal processed by the video signal processor 120. Here, the plurality of horizontal scan lines scanned by the video signal processor 120 may be vertically arranged, so that one video frame can be displayed in the display unit 130. The display unit 130 includes a display panel (not shown) that displays an image. The display panel (not shown) may include a liquid crystal display (LCD) panel having a liquid crystal layer, an organic light emitting diode (OLED) panel having a light emitting layer with an organic material, a plasma display panel (PDP), etc.

The sync signal generator 140 generates a sync signal such that the shutters of the shutter glasses 160 are opened and shut in response to the video signal, and generates a sync signal including error-correction information for correcting an error that causes malfunction of the shutter glasses 160.

If the display unit 130 displays a 3D image, the sync signal is a shutter-control signal synchronized with information about timing to display a left-eye image and a right-eye image displayed on the display unit 130. Thus, the sync signal corresponds to a display period of a 3D image displayed on the display unit 130.

In the case of a related art TV, if a 3D video signal is received with a predetermined frame rate (e.g., 24Hz, 50Hz, 60Hz, etc.), the sync signal is generated and transmitted per frame corresponding to the frame rate. For example, if a 3D video signal having a frame rate of 60Hz is received, the frame is changed every 1/60th of a second and a sync signal is generated and transmitted every 1/60th of a second for which the frame is changed.

However, according to a first exemplary embodiment, the sync signal generator 140 generates a sync signal including the error-correction information for correcting an error that causes malfunction of the shutter glasses 160. Thus, the shutter glasses 160 can generate a normal sync signal by extracting and using the error-correction information when receiving the sync signal including the error-correction information.

According to a second exemplary embodiment, the sync signal generator 140 may transmit a plurality of sync signals including the error-correction information during a predetermined period of time. For example, if a 3D video signal having a frame rate of 60Hz is received, the frame is changed every 1/60th of a second and a plurality of sync signals including the error-correction information is generated and transmitted during the 1/60th of a second.

At this time, the error-correction information is time information about difference in transmission time among the plurality of transmitted sync signals. For example, if the plurality of sync signals including the error-correction information is generated and transmitted during the 1/60th of a second for which the frame is changed, the error-correction information is the time information about a difference in transmission time between a first sync signal firstly generated and transmitted and a second sync signal secondly generated and transmitted among the plurality of sync signals. Thus, the first sync signal includes the error-correction information about the time information having a transmission time difference of 0, and the second sync signal includes the error-correction information about the time information having a transmission time difference of t from the first sync signal.

Here, the time information is calculated from the transmission time of the first sync signal firstly generated and transmitted among the plurality of sync signals transmitted during 1/60th of a second. For example, the first sync signal may include time information of "0 (t=0)," ," the second sync signal may include time information about a transmission time difference of t between the first sync signal and the second sync signal, the third sync signal may include time information about a transmission time difference of 2t between the first sync signal and the third sync signal, and the fourth sync signal may include time information about a transmission time difference of 3t between the first sync signal and the fourth sync signal.

If the shutter glasses receive the third sync signal including the time information of 2t, the time information of 2t is extracted from the third sync signal, and the transmission time of the first sync signal is calculated from the extracted time information of 2t, thereby fully restoring the first sync signal. Thus, even though at least one sync signal is lost by interference among the plurality of sync signals transmitted from the display apparatus 100 during 1/60th of a second, the shutter glasses 160 can fully restore the first sync signal from the error-correction information t=0, t, 2t, 3t, 4t, ...... included in the other sync signals received without any loss, thereby preventing the shutter of the shutter glasses 160 from malfunction.

The communication unit 150 communicates with the shutter glasses 160. A sync signal generated by the sync signal generator 140 is transmitted to the shutter glasses, in which the sync signal may be transmitted in the form of an infrared (IR) signal, a radio frequency (RF) signal, a Zigbee signal, and the like. For example, in the present exemplary embodiment, the sync signal may be transmitted in the form of the RF signal. Accordingly, the communication unit 150 may include at least one communication module respectively corresponding to at least one of the IR signal, the RF signal, the Zigbee signal, etc.

If the communication unit 150 transmits the sync signal in the form of the RF signal, the sync signal is transmitted through at least one communication channel included in a predetermined communication band. For example, the sync signal is transmitted through at least one communication channel included in a communication band of 2.4 GHz. Furthermore by way of example, the sync signal may be transmitted through a communication channel such as CH15, CH20, CH25, etc. included in the communication band of 2.4 GHz.

As described above with reference to the second exemplary embodiment, a plurality of sync signals including the error-correction information may be transmitted during a predetermined period of time by way of example.

According to a third exemplary embodiment, the communication unit 150 can transmit the plurality of sync signals including the error-correction information through one communication channel included in a predetermined communication band during a predetermined period of time. For example, the plurality of sync signals including the error-correction information can be transmitted through the communication channel CH15 included in a communication band of 2.4 GHz during a predetermined period of time.

According to a fourth exemplary embodiment, the communication unit 150 can transmit the plurality of sync signals including the error-correction information through a plurality of communication channels included in a predetermined communication band during a predetermined period of time. For example, the plurality of sync signals including the error-correction information can be transmitted during a predetermined period of time through the communication channels CH15, CH20 and CH25 included in a communication band of 2.4 GHz. At this time, the communication unit 150 may alternately use the communication channels CH15, CH20 and CH25 to transmit the plurality of sync signals including the error-correction information during a predetermined period of time. When the communication unit 150 transmits the plurality of sync signals, at least two consecutively transmitted sync signals may be transmitted through different communication channels, respectively.

According to the fourth exemplary embodiment, when the plurality of sync signals including the error-correction information is transmitted through the plurality of communication channels included in a predetermined communication band during a predetermined period of time, a reference channel may be set and used. For example, an initial sync signal that informs a frame change may always be transmitted through the communication channel CH15. As described above with reference to the second exemplary embodiment, when first, second and third sync signals are transmitted during 1/60th of a second, the first sync signal may always be transmitted through the communication channel CH15 as the initial sync signal informing the frame change.

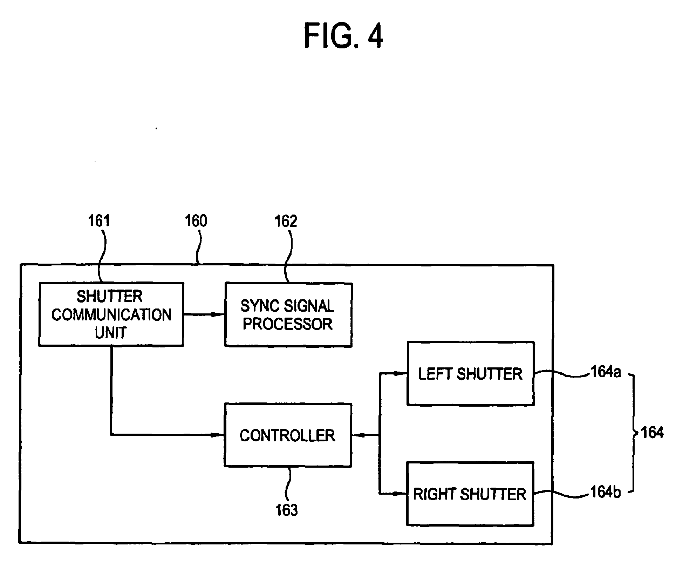

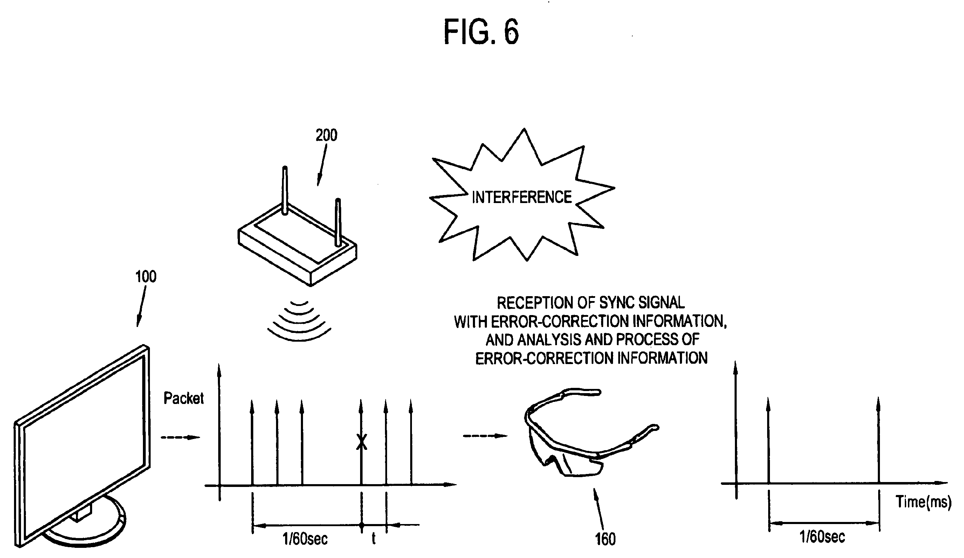

FIG. 4 is a control block diagram of shutter glasses 160 according to an exemplary embodiment. Referring to FIG. 6, the shutter glasses 160 include a shutter communication unit 161, a sync signal processor 162, a controller 163, and a shutter unit 164 having a left shutter 164a and a right shutter 164b.

The shutter communication unit 161 receives a sync signal including error-correction information for correcting an error that causes a malfunction of the shutter glasses 160 from the display apparatus 100, and transmits the sync signal to the controller 163. Here, the sync signal may be transmitted from the display apparatus 100 according to the first exemplary embodiment.

Also, the shutter communication unit 161 may receive a plurality of sync signals induding the error-correction information during a predetermined period of time. In this case, the sync signal may be the sync signal transmitted from the display apparatus 100 according to the second exemplary embodiment. Thus, repetitive descriptions of the error-correction information according to the second exemplary embodiment are omitted herein.

The shutter communication unit 161 corresponds to the communication unit 150 of the display apparatus 100, which receives a sync signal including error-correction information from the communication unit 150. The sync signal may be an infrared (IR) signal, a radio frequency (RF) signal, a Zigbee signal, or the like. For example, in the present exemplary embodiment, the sync signal may be received in the form of the RF signal. Accordingly, the shutter communication unit 161 may include at least one communication module respectively corresponding to at least one of the IR signal, the RF signal, the Zigbee signal, etc.

The shutter communication unit 161 receives the sync signal through at least one communication channel included in a predetermined communication band. Here, the sync signal may be the sync signal transmitted from the display apparatus 100 according to the third or fourth exemplary embodiments.

When the shutter communication unit 161 receives the plurality of sync signals, at least two consecutively received sync signals may be received through different communication units, respectively. In this case, the sync signal may be the sync signal transmitted from the display apparatus according to the fourth exemplary embodiment.

The sync signal processor 162 processes a sync signal received from the shutter communication unit 161 and including error-correction information. That is, the error-correction information is extracted from the sync signal, and a corrected sync signal is generated on the basis of the extracted information.

Referring back to the second exemplary embodiment, when the second sync signal including the time information of t is received, the time information of t is extracted from the second sync signal, and the transmission time of the first sync signal is calculated on the basis of the extracted time information of t, thereby fully restoring the first sync signal. Therefore, even though the first sync signal initially generated and transmitted during a 1/60th of a second period is not received by interference, the first sync signal can be fully restored (or generated) from the subsequently received second, third and fourth sync signals on the basis of the foregoing principle, thereby preventing the shutter of the shutter glasses 160 from malfunction.

The controller 163 controls the sync signal processor 162 to generate a sync signal corrected on the basis of the error-correction information when receiving the sync signal including the error-correction information for correcting an error that causes malfunction of the shutter glasses 160 from the display apparatus 100, and selectively opens and shuts the shutter unit 164 (to be described later) in response to the corrected sync signal.

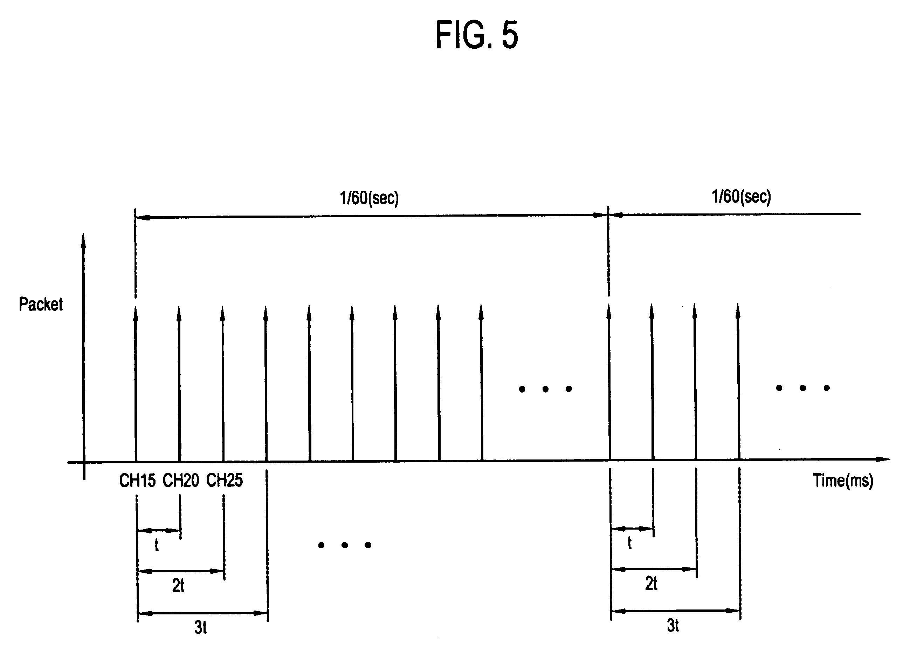

FIG. 5 is a view showing a principle of a display apparatus operating according to the fourth exemplary embodiment. Referring to FIG. 5, if the display apparatus 100 according to the fourth exemplary embodiment receives a video signal having a frame rate of 60 Hz by way of example, the sync signal generator 140 may alternately transmit a plurality of sync signals including error-correction information through a plurality of communication channels (e.g., CH15, CH20 and CH25 included in a band of 2.4 GHz) during a 1/60th of a second period for which one frame is displayed. For example, the first sync signal including initial timing information of a predetermined frame is transmitted through the communication channel CH15; the second sync signal including the error-correction information (i.e**.,** difference t in transmission time between the first sync signal and the second sync signal) in addition to the first sync signal is transmitted through the communication channel CH20; and the third sync signal including the error-correction information (i.e., difference 2t in transmission time between the first sync signal and the third sync signal) In addition to the first sync signal is transmitted through the communication channel CH25.

At this time, the first sync signal including the initial timing information having a predetermined frame may always be transmitted through the communication channel CH15. Also, the two consecutively transmitted sync signals may be transmitted through different communication channels from each other.

FIG. 6 is a view showing a principle of a display apparatus and shutter glasses 160 operating according to an exemplary embodiment. Referring to FIG. 6, the display apparatus 100 according to an exemplary embodiment transmits a plurality of sync signals including error-correction information to the shutter glasses 160 during a predetermined period of time (e.g., time for which one frame is scanned to the display unit).

At this time, if one of the plurality of transmitted sync signals is lost by interference with a wireless signal of an external device 200, the shutter glasses 160 extract the error-correction information from the sync signal having no loss among the plurality of sync signals, and generates a sync signal corrected on the basis of the extracted error-correction information, thereby opening and shutting the shutter unit 164 of the shutter glasses 160 on the basis of the corrected sync signal. Thus, the shutter glasses 160 can be prevented from malfunction.

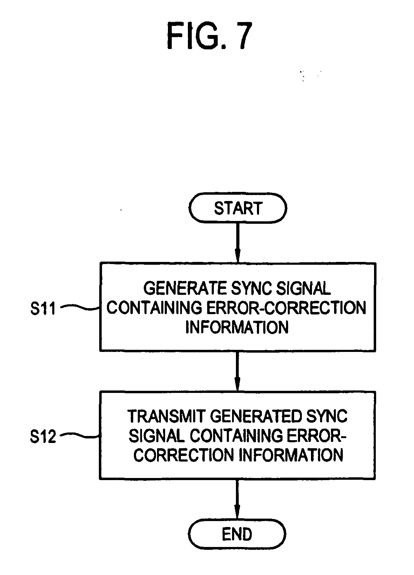

FIG. 7 is a flowchart showing a method of transmitting a sync signal in a display apparatus according to an exemplary embodiment.

The method of transmitting the sync signal in the display apparatus 100 according to this exemplary embodiment includes generating a sync signal containing error-correction information at operation S11; and transmitting the generated sync signal containing the error-correction information at operation S12.

The operation S12 may include transmitting a plurality of generated sync signals containing the error-correction information. The operation S12 may include transmitting the sync signal as an RF signal. The operation S12 may include transmitting the generated sync signal containing the error-correction information through at least one communication channel included in a predetermined communication band. The operation S12 may include respectively transmitting at least two consecutively transmitted sync signals through different communication channels when the plurality of sync signals is transmitted.

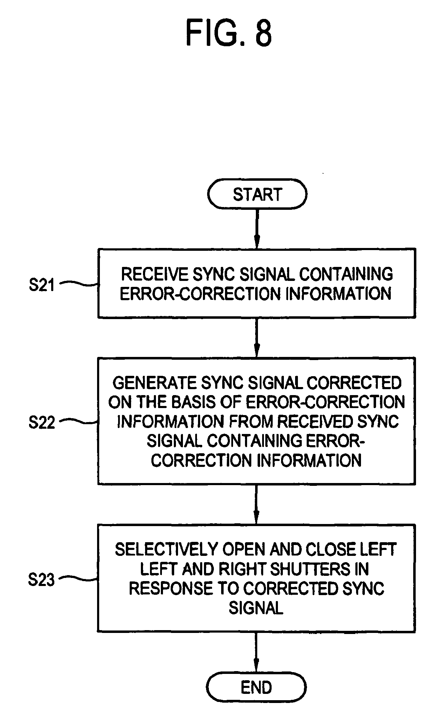

FIG. 8 is a flowchart showing a method of controlling shutter glasses according to an exemplary embodiment.

The method of controlling the shutter glasses in this exemplary embodiment includes receiving the sync signal containing the error-correction information from the display apparatus 100 at operation S21; generating a sync signal corrected based on the error-correction information from the received sync signal containing the error-correction information at operation S22; and selectively opening and shutting the shutter unit 164 in response to the corrected sync signal at operation S23.

The operation S21 may include receiving a plurality of sync signals containing error-correction information during a predetermined period of time. The operation S21 may include receiving the sync signal as an RF signal. The operation S21 may include receiving the sync signal through at least one communication channel included in a predetermined communication band. The operation S21 may include respectively receiving at least two consecutively transmitted sync signals through different communication channels when the plurality of sync signals is received.

As described above, there are provided a method and apparatus which can prevent shutter glasses from an error in opening and closing shutters even though the sync signal transmitted from the display apparatus is interfered with a surrounding signal.

Though the above-described exemplary embodiments describe a display apparatus 100 which generates a sync signal, it is understood that another exemplary embodiment is not limited thereto. For example, according to another exemplary embodiment, a stand-alone device may generate and transmit the sync signal including error-correction information to shutter glasses 160.

While not restricted thereto, exemplary embodiments can also be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, exemplary embodiments may be written as computer programs transmitted over a computer-readable transmission medium, such as a carrier wave, and received and implemented in general-use or special-purpose digital computers that execute the programs. Moreover, while not required in all aspects, one or more units of the display apparatus 100 or the shutter glasses 160 can include a processor or microprocessor executing a computer program stored in a computer-readable medium.

Although a few preferred embodiments have been shown and described, it will be appreciated by those skilled in the art that various changes and modifications might be made without departing from the scope of the invention, as defined in the appended claims.

## Claims

1. A display apparatus (100) for displaying an image to be viewed with shutter glasses, the display apparatus comprising:
a video signal processor (120) which processes a predetermined three-dimensional (3D) video signal to be displayed on a display unit;
a communication unit (150) which communicates with the shutter glasses; and
a sync signal generator (140) which generates a sync signal to open and close shutters of the shutter glasses in correspondence with the 3D video signal, the generated sync signal comprising sync signal error-correction information for correcting an error in a transmitted sync signal that causes malfunction of the shutter glasses, wherein the sync signal generator transmits, to the shutter glasses, the generated sync signal comprising the sync signal error-correction information through the communication unit.

2. The display apparatus according to claim 1, wherein the sync signal generator transmits a first sync signal comprising first error-correction information and a second sync signal comprising second error-correction information during a predetermined period of time.

3. The display apparatus according to claim 2, wherein the first and second error-correction information comprise time information about a difference in transmission time between the first and second sync signals.

4. The display apparatus according to claim 1, wherein the transmitted sync signal is a radio frequency (RF) signal.

5. The display apparatus according to claim 2, wherein the communication unit transmits the first and second sync signals through at least one communication channel included in a predetermined communication band.

6. The display apparatus according to claim 5, wherein the communication unit transmits the first sync signal through a first communication channel and the second sync signal through a second communication channel, different from the first communication channel.

7. The display apparatus according to claim 1, further comprising a receiver which receives the 3D video signal from an exterior source.

8. The display apparatus according to claim 1, further comprising the display unit which displays a 3D image corresponding to the processed 3D video signal.

9. The display apparatus according to claim 1, further comprising the shutter glasses (160) which comprise:
a shutter unit (164) which comprises a left shutter and a right shutter opened and shut alternately; and
a controller (163) which controls the shutter unit to alternately open and shut the left shutter and the right shutter in response to the transmitted sync signal comprising the error-correction information.

10. The display apparatus according to claim 9, wherein:
the shutter glasses further comprise a sync signal processor (162) which processes the sync signal comprising the error-correction information; and
the controller controls the sync signal processor to generate a corrected sync signal corrected according to the error-correction information and the shutter unit to alternately open and shut the left shutter and the right shutter in response to the corrected sync signal.

11. The display apparatus according to claim 10, wherein:
the sync signal generator transmits a first sync signal comprising first error-correction information and a second sync signal comprising second error-correction information during a predetermined period of time; and
the controller generates the corrected sync signal according to the second error-correction information when the first sync signal is not received by the shutter glasses.

12. The display apparatus of claim 2, wherein the predetermined period of time corresponds to a frame of the 3D video signal.

13. Shutter glasses (160) for viewing a three-dimensional (3D) image on a display apparatus, the shutter glasses comprising:
a shutter unit (164) comprising a left shutter and a right shutter;
a sync signal processor (162) which processes a received sync signal for alternately opening and shutting the left shutter and the right shutter, the sync signal comprising sync signal error-correction information for correcting an error of the received sync signal that causes malfunction of the shutter unit;
a shutter communication unit (161) which receives the sync signal from the display apparatus; and
a controller (163) which controls the sync signal processor to generate a corrected sync signal corrected according to the sync signal error-correction information when receiving the sync signal from the display apparatus, and which controls the shutter unit to selectively open and shut the left shutter and the right shutter in response to the corrected sync signal.

14. The shutter glasses according to claim 13, wherein the shutter communication unit receives a first sync comprising first error-correction information and a second sync signal comprising second error-correction information during a predetermined period of time corresponding to a frame of the 3D image; wherein the first and second error-correction information comprise time information about a difference in transmission time between the first and second sync signals.

15. The shutter glasses according to claim 14, wherein the shutter communication unit receives the first sync signal through a first communication channel and the second sync signal through a second communication channel, different from the first communication channel.

## Patentansprüche

1. Anzeigevorrichtung (100) zum Anzeigen eines Bilds, das mit Blendengläsern anzuschauen ist, wobei die Anzeigevorrichtung Folgendes umfasst:
einen Videosignalprozessor (120), der ein im Voraus bestimmtes dreidimensionales (3D) Videosignal verarbeitet, das auf einer Anzeigeeinheit anzuzeigen ist;
eine Kommunikationseinheit (150), die mit den Blendengläsern kommuniziert; und
einen Synchronisationssignalgenerator (140), der ein Synchronisationssignal zum Öffnen und Schließen von Blenden der Blendengläser in Korrespondenz mit dem 3D-Videosignal erzeugt, wo b e i da s erzeugte Synchronisationssignal Synchronisationssignal-Fehlerkorrekturinformationen zum Korrigieren eines Fehlers in einem übertragenen Synchronisationssignal, der Fehlfunktion der Blendengläser verursacht, umfasst, wobei der Synchronisationssignalgenerator das erzeugte Synchronisationssignal, das die Synchronisationssignal-Fehlerkorrekturinformationen umfasst, du r c h die Kommunikationseinheit zu den Blendengläsern überträgt.

2. Anzeigevorrichtung nach Anspruch 1, wobei der Synchronisationssignalgenerator ei n erstes Synchronisationssignal, da s erste Fehlerkorrekturinformationen umfasst, und ein zweites Synchronisationssignal, da s zweite Fehlerkorrekturinformationen umfasst, während einer im Voraus bestimmten Zeitperiode überträgt.

3. Anzeigevorrichtung nach Anspruch 2, wobei die ersten und zweiten Fehlerkorrekturinformationen Zeitinformationen über eine Differenz in der Übertragungszeit zwischen dem ersten un d zweiten Synchronisationssignal umfassen.

4. Anzeigevorrichtung nach Anspruch 1, wobei das übertragene Synchronisationssignal ein Hochfrequenz-(HF)-Signal ist.

5. Anzeigevorrichtung nach Anspruch 2, wobei die Kommunikationseinheit das erste und zweite Synchronisationssignal durch mindestens einen Kommunikationskanal, der in einem im Voraus bestimmten Kommunikationsband enthalten ist, überträgt.

6. Anzeigevorrichtung nach Anspruch 5, wobei die Kommunikationseinheit das erste Synchronisationssignal durch einen ersten Kommunikationskanal und das zweite Synchronisationssignal durch einen zweiten Kommunikations kanal, der von dem ersten Kommunikationskanal verschieden ist, überträgt.

7. Anzeigevorrichtung nach Anspruch 1, weiter einen Empfänger umfassend, der das 3D-Videosignal von einer äußeren Quelle empfängt.

8. Anzeigevorrichtung nach Anspruch 1, weiter die Anzeigeeinheit umfassend, die ein 3D-Bild korrespondierend mit dem verarbeiteten 3D-Videosignal anzeigt.

9. Anzeigevorrichtung nach Anspruch 1, weiter die Blendengläser (160) umfassend, die Folgendes umfassen:
eine Blendeneinheit (164), die eine linke Blende und eine rechte Blende umfasst, die abwechselnd geöffnet und geschlossen werden; und
eine Steuerung (163), die die Blendeneinheit steuert, um die linke Blende und die rechte Blende als Reaktion auf das übertragene Synchronisationssignal, das die Fehlerkorrekturinformationen enthält, abwechselnd zu öffnen und zu schließen.

10. Anzeigevorrichtung nach Anspruch 9, wobei:
die Blendengläser weiter einen Synchronisationssignal-Prozessor (162) umfassen, der das Synchronisationssignal, das die Fehlerkorrekturinformationen enthält, verarbeitet; und
d i e Steuerung de n Synchronisationssignal-Prozessor, um ein korrigiertes Synchronisationssignal, das gemäß den Fehlerkorrekturinformationen korrigiert wird, zu erzeugen, und die Blendeneinheit, um die linke Blende und die rechte Blende als Reaktion auf das korrigierte Synchronisationssignal abwechselnd zu öffnen und zu schließen, steuert.

11. Anzeigevorrichtung nach Anspruch 10, wobei:
der Synchronisationssignalgenerator ein erstes Synchronisationssignal**,** das erste Fehlerkorrekturinformationen umfasst, und ein zweites Synchronisationssignal , da s zweite Fehlerkorrekturinformationen umfasst, während einer im Voraus bestimmten Zeitperiode überträgt; und
die Steuerung das korrigierte Synchronisationssignal gemäß den zweiten Fehlerkorrekturinformationen erzeugt, wenn das erste Synchronisationssignal nicht von den Blendengläsern empfangen wird.

12. Anzeigevorrichtung nach Anspruch 2, wobei die im Voraus bestimmte Zeitperiode mit einem Rahmen des 3D-Videosignals korrespondiert.

13. Blendengläser (160) zu m Anschauen eines dreidimensionalen (3D) Bilds auf einer Anzeigevorrichtung, wobei die Blendengläser Folgendes umfassen:
eine Blendeneinheit (164), die eine linke Blende und eine rechte Blende umfasst;
einen Synchronisationssignal-Prozessor (162), der ein empfangenes Synchronisationssignal verarbeitet, um die linke Blende und die rechte Blende abwechselnd zu **öffnen und zu schließen**, **wobei** das **Synchronisationssignal** Synchronisationssignal-Fehlerkorrekturinformationen zum Korrigieren eines Fehlers des empfangenen Synchronisationssignals, der Fehlfunktion der Blendeneinheit verursacht, umfasst;
eine Blendenkommunikationseinheit (161), die das Synchronisationssignal vo n de r Anzeigevorrichtung empfängt; und
**eine Steuerung** (163), d i e den Synchronisationssignal-Prozessor **steuert**, um ein korrigiertes Synchronisationssignal, das gemäß den Synchronisationssignal-Fehlerkorrekturinformationen korrigiert **wird,** zu erzeugen, we n n das Synchronisationssignal vo n de r Anzeigevorrichtung empfangen wird, und die die Blendeneinheit steuert, um die linke Blende und die rechte Blende als Reaktion auf das korrigierte Synchronisationssignal selektiv zu öffnen und zu schließen.

14. Blendengläser nach Anspruch 13, wobei die Blendenkommunikationseinheit ei n erstes Synchronisationssignal, da s erste Fehlerkorrekturinformationen umfasst, und ein zweites Synchronisationssignal , da s zweite Fehlerkorrekturinformationen umfasst, während einer im Voraus bestimmten Zeitperiode, die mit einem Rahmen des 3D-Bilds korrespondiert, empfängt; wobei die ersten und zweiten Fehlerkorrekturinformationen Zeitinformationen über eine Differenz in der Übertragungszeit zwischen dem ersten und zweiten Synchronisationssignal umfassen.

15. Blendengläser n a c h Anspruch 14, wobei die Blendenkommunikationseinheit da s erste Synchronisationssignal du r c h ei n e n ersten Kommunikations kanal und das zweite Synchronisationssignal du r c h ei n e n zweiten Kommunikations kanal, der von dem ersten Kommunikationskanal verschieden ist, empfängt.

## Revendications

1. Appareil d'affichage (100) destiné à afficher une image devant être visualisée à l'aide de lunettes à obturateurs, l'appareil d'affichage comprenant :
un processeur de signal vidéo (120) qui traite un signal vidéo tridimensionnel (3D) prédéterminé devant être affiché sur une unité d'affichage ;
une unité de communication (150) qui communique avec les lunettes à obturateurs ; et
un générateur de signal de synchronisation (140) qui génère un signal de synchronisation pour ouvrir et fermer des obturateurs des lunettes à obturateurs en correspondance avec le signal vidéo 3D, le signal de synchronisation généré comprenant une information de correction d'erreur de signal de synchronisation destinée à corriger une erreur contenue dans un signal de synchronisation transmis qui provoque un défaut de fonctionnement de s lunettes à obturateurs, le générateur de signal de synchronisation transmettant aux lunettes à obturateurs le signal de synchronisation généré comprenant l'information de correction d'erreur de signal de synchronisation par l'intermédiaire de l'unité de communication.

2. Appareil d'affichage selon la revendication 1, dans lequel le générateur de signal de synchronisation transmet un premier signal de synchronisation comprenant une première information de correction d'erreur et un second signal de synchronisation comprenant une seconde information de correction d'erreur pendant une période de temps prédéterminée.

3. Appareil d'affichage selon la revendication 2, dans lequel les première et seconde informations de correction d'erreur comprennent une information de temps concernant un e différence d e te mp s de transmission entre les premier et second signaux de synchronisation.

4. Appareil d'affichage selon la revendication 1, dans lequel le signal de synchronisation transmis est un signal radiofréquence (RF).

5. Appareil d'affichage selon la revendication 2, dans lequel l'unité de communication transmet les premier et second signaux de synchronisation par l'intermédiaire d'au moins un canal de communication contenu dans une bande de communication prédéterminée.

6. Appareil d'affichage selon la revendication 5, dans lequel l'unité de communication transmet le premier signal de synchronisation par l'intermédiaire d'un premier canal de communication et le second signal de synchronisation par l'intermédiaire d'un second canal de communication, différent du premier canal de communication.

7. Appareil d'affichage selon la revendication 1, comprenant en outre un récepteur qui reçoit le signal vidéo 3D d'une source extérieure.

8. Appareil d'affichage selon la revendication 1, comprenant en outre l'unité d'affichage qui affiche une image 3D correspondant au signal vidéo 3D traité.

9. Appareil d'affichage selon la revendication 1, comprenant en outre les lunettes à obturateurs (160) qui comprennent :
une unité à obturateurs (164) qui comprend un obturateur gauche et un obturateur droit ouverts et fermés en alternance ; et
une unité de commande (163) qui commande l'unité à obturateurs afin d'ouvrir et de fermer en alternance l'obturateur gauche et l'obturateur droit en réponse au signal de synchronisation transmis comprenant l'information de correction d'erreur.

10. Appareil d'affichage selon la revendication 9, dans lequel :
les lunettes à obturateurs comprennent en outre un processeur de signal de synchronisation (162) qui traite le signal de synchronisation comprenant l'information de correction d'erreur ; et
l'unité de commande commande le processeur de signal de synchronisation afin de générer un signal de synchronisation corrigé en fonction de l'information de correction d'erreur et l'unité à obturateurs afin d'ouvrir et de fermer en alternance l'obturateur gauche et l'obturateur droit en réponse au signal de synchronisation corrigé.

11. Appareil d'affichage selon la revendication 10, dans lequel :
le générateur de signal de synchronisation transmet un premier signal de synchronisation comprenant une première information de correction d'erreur et un second signal de synchronisation comprenant une seconde information de correction d'erreur pendant une période de temps prédéterminée ; et
l'unité de commande génère le signal de synchronisation corrigé en fonction de la seconde information de correction d'erreur lorsque le premier signal de synchronisation n'est pas reçu par les lunettes à obturateurs.

12. Appareil d'affichage selon la revendication 2, dans lequel la période de t e mp s prédéterminée correspond à une trame du signal vidéo 3D.

13. Lunettes à obturateurs (160) destinées à visualiser une image tridimensionnelle (3D) sur un appareil d'affichage, les lunettes à obturateurs comprenant :
une unité à obturateurs (164) comprenant un obturateur gauche et un obturateur droit ;
un processeur de signal de synchronisation (162) qui traite un signal de synchronisation reçu afin d'ouvrir et de fermer en alternance l'obturateur gauche et
l'obturateur droit, le signal de synchronisation comprenant une information de correction d'erreur de signal de synchronisation destinée à corriger une erreur du signal de synchronisation reçu qui provoque un défaut de fonctionnement de l'unité à obturateurs ;
une un i t é de communication d'obturateur (161) qui reçoit le signal de synchronisation de l'appareil d'affichage ; et
une unité de commande (163) qui commande le processeur de signal de synchronisation afin de générer un signal de synchronisation corrigé en fonction de l'information de correction d'erreur de signal de synchronisation lors de la réception du signal de synchronisation en provenance de l'appareil d'affichage, et qui commande l' unité à obturateurs afin d'ouvrir et de fermer sélectivement l'obturateur gauche et l'obturateur droit en réponse au signal de synchronisation corrigé.

14. Lunettes à obturateurs selon la revendication 13, dan s lesquelles l'unité de communication d'obturateur reçoit un premier signal de synchronisation comprenant une première information de correction d'erreur et un second signal de synchronisation comprenant une seconde information de correction d'erreur pendant une période de temps prédéterminée correspondant à une trame de l'image 3D ; les première et seconde informations de correction d'erreur comprenant une information de temps concernant une différence de temps de transmission entre les premier et second signaux de synchronisation.

15. Lunettes à obturateurs selon la revendication 14, dans lesquelles l'unité de communication d'obturateur reçoit le premier signal de synchronisation par l'intermédiaire d'un premier canal de communication et le second signal de synchronisation par l'intermédiaire d'un second canal de communication, différent du premier canal de communication.
